# EUROPEAN PATENT APPLICATION

(11) **EP 4 194 247 A1**
(43) Date of publication of application: **14.06.2023**
(21) Application number: 22211726.9
(22) Date of filing: 06.12.2022
(51) Int. Cl.: B60L 3/04, B60L 3/00, B62D 21/15, B62D 33/077

(54) **ELECTRIC COMMERCIAL VEHICLE COMPRISING AN IMPACT DEVICE SAFETY ARRANGEMENT**

(30) Priority: 07.12.2021 NL 2030055
(71) Applicant: DAF Trucks N.V., 5643 TW Eindhoven (NL)
(72) Inventor: BROEDERS, Johannes Baptist Wilhelmus Bernardus Maria, 5643 TW Eindhoven (NL); KESSELS, Johannes Theodorus Bernard Anna, 5643 TW Eindhoven (NL)
(74) Representative: V.O.

(57) **Abstract**

A commercial vehicle, comprising an electric power module, a high voltage system, a control circuit, and an impact device arranged to protect a unit of the vehicle in case of a collision, by absorbing collision energy. The control circuit at least partially passes through the impact device. The impact device comprises an electrical conductor arranged for disconnecting by a relative movement between the chassis and the unit. When disconnected, the control circuit is interrupted, thereby switching the electric power module from an active state, in which electric power is provided to the high voltage system, to a passive safe state, in which electric power to the high voltage system is switched off.

## Description

The invention relates to a commercial vehicle, comprising an impact device arranged for protecting a unit of the vehicle in case of a collision, by absorbing collision energy while switching off the high voltage system of the vehicle.

Safety is a key development area for vehicles, such as trucks driven by an electric power source. One of the present targets defined by the EU is to have zero fatalities in road accidents in 2050. As such, a general objective is to prevent hazardous situations, which may occur due to human or technical failures or due to lack of effective safety systems, e.g. after a collision.

For example in battery powered commercial vehicles, battery packs may be mounted to the chassis underneath the cabin, e.g. comparable to the position of a combustion engine installed in a conventionally powered vehicle. A number of electrical components, including high voltage (HV) wiring and connections, may be placed around these packs. For example, in case of a frontal collision of a truck against a trailer of a preceding truck, the cabin may be moving rearward relative to the chassis, thereby impacting live HV components that are mounted in front of the battery pack. A damaged HV component may cause a hazardous situation, e.g. for the driver and passengers of the cabin or for first responders, due to a risk of electrocution.

Known safety systems in battery electric vehicles may include passive measures, such as a safety cut loop which can be cut by rescue services, e.g. fire fighters, to switch off the high voltage system in case of an accident. During the period between the time of accident and the time of arrival of the rescue services, however, the safety of the driver and passengers may still be at risk.

Other known safety systems may include active measures, such as crash sensors which can be used to trigger switching off the high voltage system based on a detected deceleration. Crash sensors, however, may only act on deceleration levels above a certain threshold in a specific direction and may not be able to trigger a HV system switch-off when e.g. the deceleration levels are low or in case a collision is not exactly in line with the specific direction of the sensor. Increasing the sensitivity of the crash sensor may cause the HV system to switch off in unwanted situations, e.g. during emergency braking, which, in turn, creates a new hazardous situation. Similarly, increasing the number of crash sensors to cover multiple directions may make the safety system more complex, and thereby prone to failure.

It is an object of the present invention to provide a safety system for a commercial vehicle , wherein the safety system is able to protect the driver and passengers against high voltage hazards in case of a collision, while being robust and simple.

### SUMMARY

In summary, aspects of the invention pertain to a commercial vehicle comprising an electric power module, a high voltage system, a control circuit, and an impact device. The electric power module is mounted to a chassis of the vehicle and arranged for providing electric power. The high voltage system is arranged for receiving electric power from the electric power module. The control circuit is coupled to the electric power module and arranged for providing a control signal. The control signal is arranged for switching the electric power module between an active state, in which electric power is provided to the high voltage system, and a passive safe state, in which electric power is switched off. The impact device forms a mechanical connection between the chassis and a unit of the vehicle, and is arranged for allowing a relative displacement between the unit and the chassis while maintaining the mechanical connection in case of a collision of the vehicle, to protect the unit by absorbing collision energy. The control circuit at least partially passes through the impact device. The impact device comprises an electrical conductor arranged for disconnecting by the relative movement between the chassis and the unit. When disconnected, the control circuit is interrupted, thereby switching the electric power module from the active state to the passive safe state.

Accordingly, a simple and robust safety measure for protecting a driver or passenger of a commercial vehicle against high voltage (HV) hazards, in particular against risk of electric shock from damaged high voltage components, can be provided in case of frontal impacts of the vehicle without the need for additional crash sensors which may not be able to detect all critical situations, such as low speed collisions. Since the presented safety measure can be triggered in all situations where the unit is moved relatively to the chassis, including situations in which the direction of the collision is at an angle to the driving direction of the vehicle, it may provide an effective measure that can reduce the risk of fire/explosion and contact with live HV parts, e.g. due to compression of HV components, by immediately switching off the HV system.

In case of a collision, the impact device is arranged for allowing a relative movement between the unit and the chassis, e.g. along a driving direction or lateral direction of the vehicle, between a normal condition and a shifted condition. Preferably, the electrical conductor is arranged for disconnecting by a relative movement between the unit and the chassis from the normal condition to the shifted condition. Accordingly, the impact device absorbs collision energy by allowing the relative displacement between the unit, e.g. the cabin, and the chassis, while using the relative displacement to switch off the HV system of the commercial vehicle. The vehicle may be provided with more than one impact device, e.g. mounted at different positions and/or orientations between the unit and the chassis, to be able to detect collisions from different sides of the vehicle and/or with different angles of impact, and switch off the HV system accordingly.

In other or further embodiments, the impact device comprises a breaking element, wherein, prior to a collision, the breaking element is arranged for fixating the unit to the chassis in the normal condition, and wherein, in case of a collision, the breaking element is arranged for breaking to allow a relative movement between the unit and the chassis towards the shifted condition. Accordingly, collision energy can be absorbed by the impact device, while being able to interrupt the control circuit as soon as a collision force is detected, e.g. by having the breaking element form the electrical conductor, for example by being made of an electrically conductive material, to switch the electric power module from the active state to the passive safe state.

To be able to distinguish between acceleration forces under normal driving conditions of the vehicle, during which the unit and the chassis should remain fixed to each other, and collision forces, during which the unit and the chassis should move relative to each other, the impact device can be arranged for interrupting the control circuit when the relative movement between the unit and the chassis exceeds a movement threshold, by disconnecting the electrical conductor. Preferably, the control circuit is interrupted irreversibly, to prevent that the electric power module can unexpectedly be switched back from the passive safe state to the active state.

For example, the electrical conductor can be disconnected in a manner that separates the disconnected parts of the electrical conductor by a separation distance with a sufficient safety margin, e.g. a separation distance that cannot be bridged by accidental movements of the unit relative to the chassis, e.g. caused by the driver or passenger of the vehicle moving inside the cabin, or by rescue workers handling the vehicle.

Alternatively, or additionally, the control circuit may comprise a one or more fuses, and the disconnected part corresponding to the supply side of the electrical conductor may be arranged to connect with the chassis, thereby creating a short circuit, and blow the one or more fuses.

Preferably, the movement threshold is measured from the normal condition. The movement threshold can for example be defined as a percentage of the total displacement possible between the normal condition and the shifted condition. The movement threshold can e.g. be smaller than 50% of the total possible displacement, such that the electric power module is switched to the passive safe state within the first halve of the maximum relative movement between the unit and the chassis. More preferably, the movement threshold is smaller than 25% of the total possible displacement, such that the electric power module is switched to the passive safe state within the first quarter of the maximum relative movement between the unit and the chassis.

In some embodiments, the unit is a cabin of the commercial vehicle. As such, the impact device can protect the driver and passengers against impact by absorbing collision energy, by allowing the cabin to move relative to the chassis, while protecting the driver and passengers against electrocution by switching off the HV system of the vehicle.

In other or further embodiments, the impact device comprises at least one plate which is connected to the chassis, as well as a strip which in a lateral direction is positioned perpendicular to the at least one plate and with at least part of at least one of two longitudinal edges fixed to the at least one plate. A first end of the strip is connected to a connecting element that is connected to a transverse arm, and the transverse arm is connected to the cabin. The breaking element is mounted between the connecting element and the chassis, and the electrical conductor is arranged adjacent to the breaking element. The connecting element, in case of a collision to absorb collision energy, is adapted to be distorted relative to the transverse arm by the breaking element being arranged to break first, thereby disconnecting the electrical conductor, prior to the strip being allowed to be torn loose from the at least one plate.

To further protect the driver and/or passengers of the commercial vehicle against high voltage hazards, the vehicle may comprise at least two impact devices, wherein the control circuit passes at least partially through each of the at least two impact devices in series. In this way, a redundant passive safety system can be provided, in which a disconnection of one of the electrical conductors of the at least two impact devices leads to switching the electric power module from the active state to the passive safe state, to switch of electric power to the high voltage system.

In some embodiments, the electrical conductor comprises a breakable electrical wire. Accordingly, the electrical conductor can be mounted adjacent to the breaking element and arranged for breaking when a tension force is applied on the electrical conductor, or when it is cut manually, e.g. by rescue services, to interrupt the control circuit.

In other or further embodiments, the control circuit comprises a low power signal line arranged for providing the control signal, and wherein the electrical conductor is provided in the low power signal line. By having the electrical conductor in the low power signal line passing through the impact device, the electrical conductor can be arranged for disconnecting by the relative movement between the chassis and the unit, thereby providing fast and reliable switching of the electric power module from the active state to the passive safe state.

In some embodiments, the electric power module comprises one or more invertors, each provided with switchable elements, and the control signal is arranged for switching the electric power module to the active state by switching the switchable elements from a normally open position to a closed position. Accordingly, a disconnect of the electrical conductor, e.g. caused by a relative movement between the unit and the chassis, thereby interrupting the control circuit, can switch off the invertor.

In other or further embodiments, the electric power module comprises a power management system provided with contactors, and wherein the control signal is arranged for switching the electric power module to the active state by switching the contactors from a normally open position to a closed position. As such, the power management system can be switched off when the control circuit is interrupted, e.g. by a disconnect of the electrical conductor caused by a relative movement between the unit and the chassis.

### BRIEF DESCRIPTION OF THE DRAWINGS

The invention will be further elucidated in the figures:
FIGs 1A and 1B illustrate an embodiment of a commercial vehicle comprising an impact device;
FIGs 2A and 2B illustrate other or further embodiments of the commercial vehicle;
FIGs 3A and 3B illustrate embodiments of the impact device;
FIGs 4A and 4B illustrate other or further embodiments of the impact device;
FIG 5 provides a diagram of an embodiment of a control circuit of the commercial vehicle.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

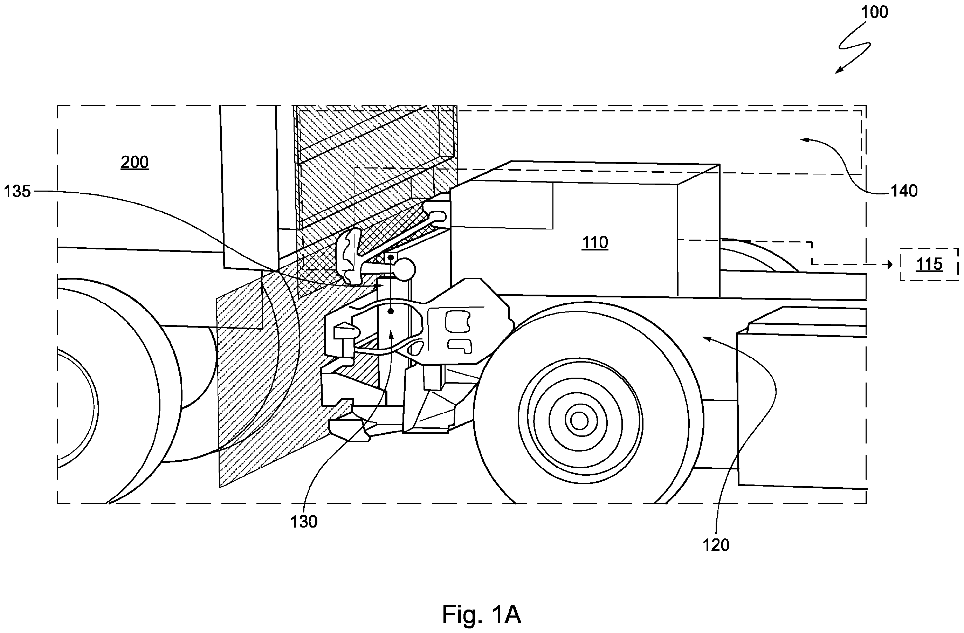

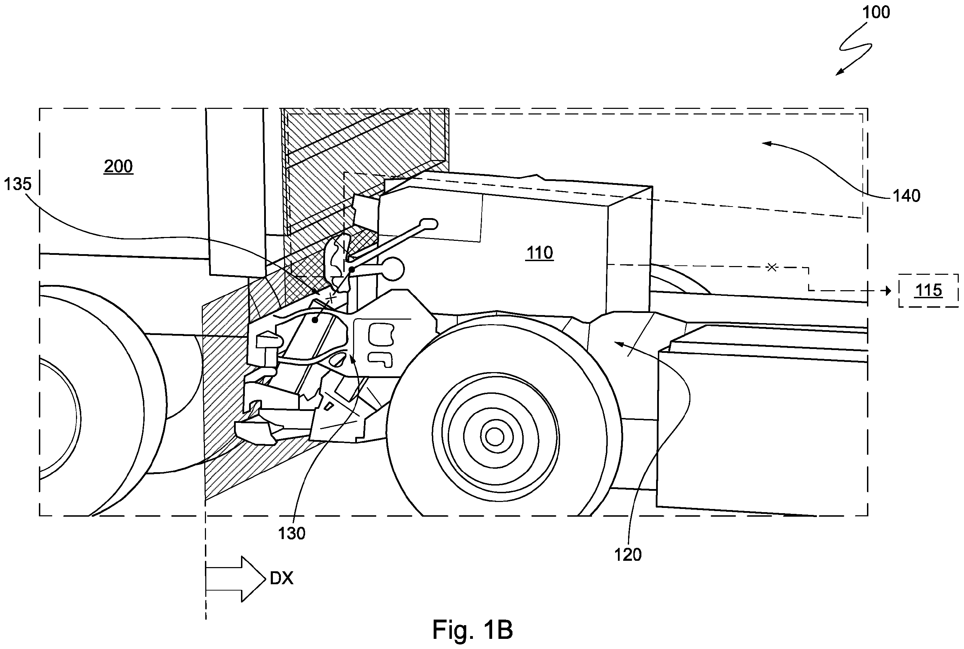

FIGs 1A and 1B illustrate an embodiment of a commercial vehicle 100, such as a truck, e.g. a tractor-trailer combination or a box truck, a bus or other type of indoor or outdoor transport vehicle, a heavy duty vehicle, or agricultural vehicle. The commercial vehicle 100 comprises an electric power module 110, e.g. comprising a battery pack and a high voltage junction box. The vehicle further comprises a high voltage system 115 arranged for receiving electric power from the electric power module 110. The high voltage system 115 may comprise e.g. an electric motor for driving the vehicle, and/or other power electronics. The electric power module 110 is mounted to a chassis 120 of the vehicle 100 and is arranged for providing electric power to the high voltage system 115.

The vehicle 100 further comprises an impact device 130, forming a mechanical connection between the chassis 120 and a unit 140 of the vehicle 100. The impact device 130 is arranged for allowing a relative movement DX between the unit 140 and the chassis 120 while maintaining the mechanical connection between the chassis 120 and the unit 140 in case of a collision of the vehicle 100, e.g. against the rear of a trailer of a preceding truck 200, to protect the unit 140 and/or or the electric power module 110 by absorbing collision energy. For example, when the unit 140 e.g. is the cabin of the vehicle 100, the impact device 130 can protect the driver and passengers against impact by absorbing collision energy, by allowing the cabin to move relative to the chassis. Alternatively, or additionally, the unit 140 can be the electric power module 110, or can be other components such as fuel cells, e.g. to reduce the forces acting on these modules or components during a collision, by allowing them to move relative to the chassis.

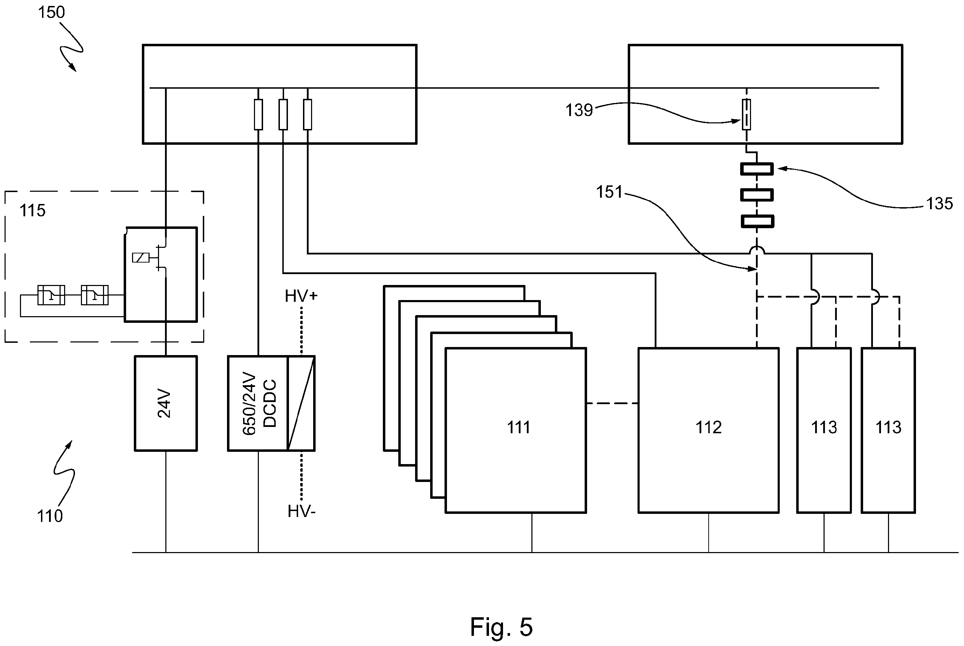

The vehicle 100 further comprises a control circuit 150, as shown in FIG 5, which is coupled to the electric power module 110 and arranged for providing a control signal, e.g. a signal arranged for controlling the power supply of components of the electric power module 110. The control circuit 150 at least partially passes through the impact device 130. For example, the control signal may pass through a signal line, preferably a low power signal line, of the control circuit 150. For example by having signal line mounted to the impact device, it can be broken by the relative movement between the unit and the chassis, thereby interrupting the control signal. As such, the control signal can be arranged for switching the electric power module 110 between an active state, in which electric power is provided to the electric motor, and a passive safe state, in which electric power is switched off.

Back to FIG 1, the impact device 130 comprises an electrical conductor 135 arranged for disconnecting by the relative movement DX between the chassis 120 and the unit 140. When disconnected, the control circuit is interrupted, thereby switching the electric power module 110 from the active state to the passive safe state. In this way, during a collision of the vehicle 100, e.g. against the rear of a preceding truck 200, the risk of electrical hazards, e.g. due to a damaged high voltage system 115, can be mitigated for the cabin 140 including the driver and passengers of the vehicle 100.

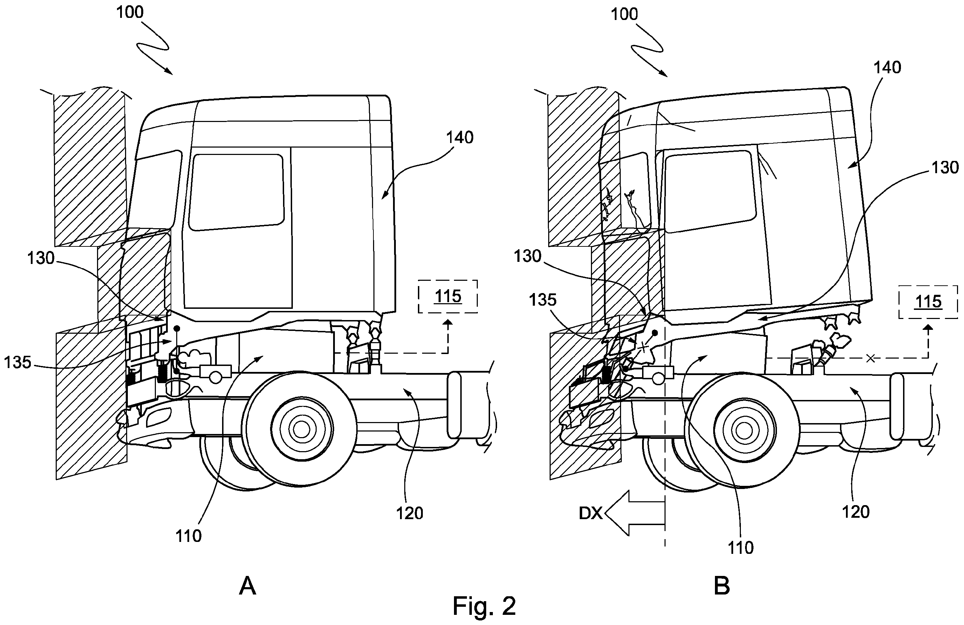

FIGs 2A and 2B illustrate other or further embodiments of the vehicle 100. In case of a collision, as shown in FIG 2B, the impact device 130 is arranged for allowing a relative movement DX between the unit 140, e.g. the cabin of the vehicle 100, and the chassis 120, e.g. along a driving direction of the vehicle 100 or along a lateral direction of the vehicle 100, between a normal condition and a shifted condition. Preferably, the unit 140 is a cabin of the vehicle 100, to protect the driver and passengers. For example in the normal condition, e.g. prior to a collision as shown in FIG 2A, the impact device 130 mechanically connects the unit 140 and the chassis 120 in a relative position and orientation in which the unit 140, e.g. the cabin, and the chassis 120 are aligned in a driving position. For example in the shifted condition, e.g. after a collision as shown in FIG 2B, the unit 140 and the chassis 120 are shifted by the impact device 130 to a relative position and orientation in which the unit 140 and the chassis 120 are misaligned, e.g. displaced.

The impact device 130 can e.g. allow a displacement between the normal condition and the shifted condition up to 40 centimeter, e.g between 20 and 40 centimeter, preferably between 30 and 40 centimeter, to absorb a sufficient amount of collision energy. Accordingly, the impact device 110 can provide an alternative solution to a crumple zone as used e.g. in passenger cars, by absorbing collision energy by allowing the relative displacement DX between the cabin 140 and the chassis 120. The present invention makes use of the relative displacement DX to switch the electric power module 110 from the active state to the passive safe state in which electric power to the high voltage system 115 is switched off, by having the impact device 130 comprise an electrical conductor 135 arranged for disconnecting by the relative movement DX between the chassis 120 and the unit 140.

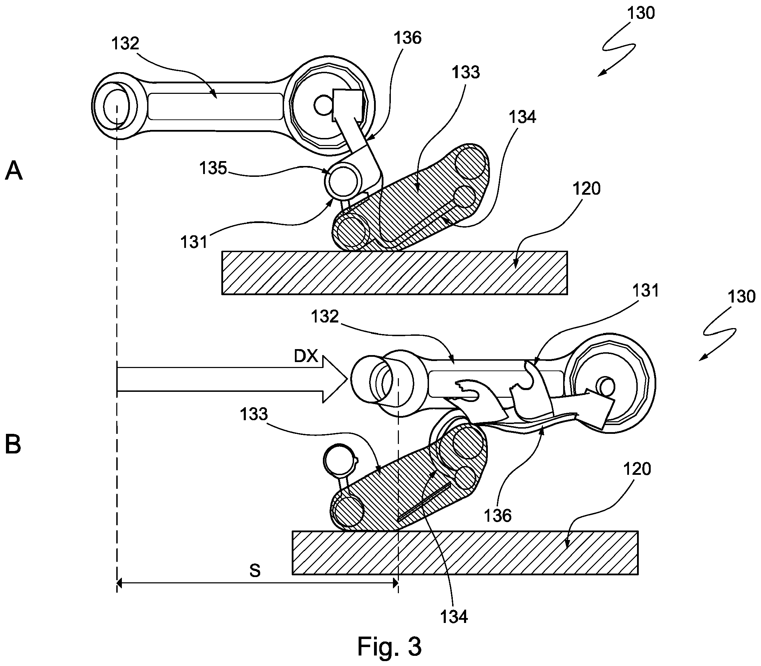

FIGs 3A and 3B illustrate embodiments of the impact device 130. The impact device 130 comprises a breaking element 131. The breaking element 131 e.g. is an element of the impact device 130 that is arranged for breaking, e.g. breaking first, when a force exerted on the impact device 130 exceeds a predefined threshold, e.g. a breaking strength of the breaking element. As such, the breaking element 131 can be regarded as a deliberately designed weakest link in the impact device 130.

Prior to a collision, the breaking element 131 is arranged for fixating the unit to the chassis 120 in the normal condition, e.g. to prevent any relative movement between the unit and the chassis 120. For example as shown in FIG 3A, the breaking element 131 can be mounted between a connecting element 136 and a plate 133. The plate 133 can e.g. be coupled to the chassis 120. The connecting element 136 can e.g. be coupled to the unit via a transverse arm 132. The impact device may further comprise a strip 134, which has a first end coupled to the connecting element 136 and a second end coupled to the plate 133 and has part of its longitudinal edge fixed to the plate 133, e.g. welded or brazed. The strip 134 and the plate 133 can be separated from each other along the fixated part of the longitudinal edge, to absorb collision energy. For example, in the direction of the relative movement DX, the mechanical strength of the plate 133 and the strip 134 can be higher than the mechanical strength of the fixated, e.g. welded, part of the longitudinal edge. The breaking element 135 may form the conducting element 135, as shown in FIG 3A, e.g. by being made of an electrically conducting material.

In case of a collision, the breaking element 131 is arranged for breaking, to allow a relative movement between the unit and the chassis towards the shifted condition. For example as shown in FIG 3B, the breaking element 131 is broken, e.g. by a collision force, thereby allowing the relative movement DX between the plate 133 coupled to the chassis 120, and the transverse arm 132 coupled to the unit. As a result of the relative movement DX being allowed by the broken breaking element 131, the connecting element 136 is moved along with the transverse arm 132, thereby causing the connecting element 136 to be distorted and causing the strip 134 to be torn from the plate 133. Accordingly, collision energy can be absorbed by the impact device 130. By having the breaking element 131 form the conducting element 135, the control circuit can be interrupted as soon as a relative displacement and/or a collision force applied on the impact device exceeds a threshold, e.g. a fracture strength or a breaking strength of the breaking element 131, to switch the electric power module from the active state to the passive safe state.

The distance S can be measured along the direction of the relative movement DX. Preferably, the distance S between the normal condition, e.g. corresponding to the position of the transverse arm 132 relative to the chassis 120 as shown in FIG 3A and the shifted condition, e.g. corresponding to the position of the transverse arm 132 relative to the chassis 120 as shown in FIG 3B, is up to 40 centimeter, e.g. in fully extended position of the impact device 130. For example, the distance S between the normal condition and the shifted condition, e.g. in fully extended position of the impact device 130, is between 20 and 40 centimeter, or between 30 and 40 centimeter. In this way, the amount of collision energy that can be absorbed by the impact device 130 may be sufficient for protecting the unit, e.g. a cabin and its driver and passengers, against high impact collisions.

In other or further preferred embodiments, the breaking element 131 is arranged for breaking to allow the relative movement DX when a collision force between the unit and the chassis 120 exceeds a threshold. For example, the breaking element can be designed accordingly by comprising a material with a specific tensile strength, e.g. in combination with a minimum cross section area, to define a minimum breaking force for breaking the breaking element 131. Such a minimum breaking force may also be defined for the electrical conductor 135. Alternatively, or additionally, the electrical conductor 135 may be arranged for disconnecting when a relative displacement between the transverse arm 132 and the chassis 120 exceeds a threshold, measured from the normal condition. Preferably, the electrical conductor is arranged for disconnecting in the initial part of the distance S along the relative movement DX between the transverse arm 132 and the chassis 120, e.g. within the first 50% of the distance S, more preferably within the first 25% of the distance S.

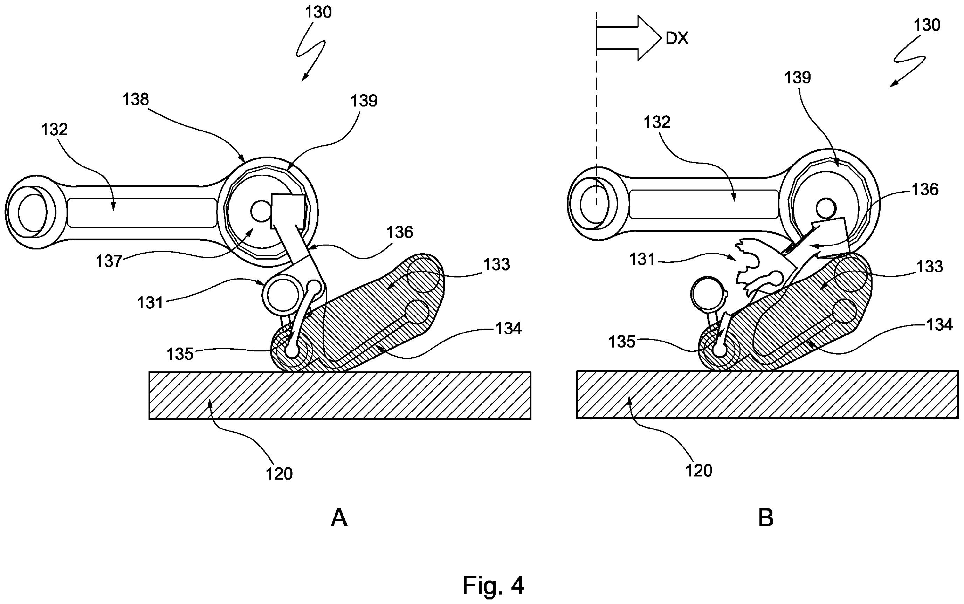

FIGs 4A and 4B illustrate other or further embodiments of the impact device 130. The impact device 130 comprises a plate 133 which is connected to the chassis 120, and a strip 134 which in a lateral direction is positioned perpendicular to the plate 133 and is fixed to the plate 133 with a part of at least one of its two longitudinal edges. The impact device 130 may comprise more than one plate 133, e.g. a pair of plates 133, such that the strip 134 is fixed with both longitudinal edges to the plates 133. Alternatively, the impact device 130 may comprise more than two plates 133, connected to more than one strip 134 in the manner described above.

A first end of the strip 134 is connected to a connecting element 136 that is connected to a transverse arm 132. The transverse arm 132 can e.g. be connected to the cabin, or to another unit of the vehicle, such as the electric power module or a fuel cell.

The breaking element 131 is mounted between the connecting element 136 and the chassis 120. As shown in FIGs 4A, the breaking element is coupled to the chassis 120 via the plate 133. The electrical conductor 135 is arranged adjacent to the breaking element 131. The electrical conductor 135 can for example be an electrical wire, optionally comprising a fuse or a connector, and arranged for breaking when a tension force is applied on the electrical conductor 135, to interrupt the control circuit. The electrical conductor may for instance comprise a breakable electrical wire.

FIG 4B illustrates that, in case of a collision, the connecting element 136 is adapted to be distorted relative to the transverse arm 132 by the breaking element 131 being arranged to break first, thereby disconnecting the electrical conductor 135, prior to the strip 134 being allowed to be torn loose from the plate 133. Accordingly, an impact device 130 is provided that can absorb collision energy by converting relative movement DZ between the cabin and the chassis 120 into deformation of components of the impact device 130. By the electrical conductor 135 being a separate entity from the breaking element 131, the electrical conductor 135 can e.g. be cut or manually interrupted to switch off the high voltage system of the vehicle, e.g. by rescue services, in case of a low impact collision in which the collision force is below the threshold, such that the breaking element 131 remains intact.

Though not contributing to the present invention as such, FIGs 4A and 4B additionally illustrate several optional components of the impact device 130, for purposes of providing examples of further implementations of the impact device 130. These illustrated optional components may be obsolete in light of the basic functioning of the impact device described herein, or may be replaced by alternative solutions to provide similar effects.

For example, the connecting element 136 can be connected to the transverse arm 132 through a shaft 137 attached to the connecting element 136, to allow a rotation between the connection element 136 and the transverse arm 132 during the relative movement DX between the transverse arm 132 coupled to the cabin and the chassis 120.

Optionally, the first end of the strip 134 can be fixed to the shaft 137, e.g. through connection element 136 as illustrated in FIGs 4A and 4B. In this way, during the relative movement DX, the strip 134 is torn from the plate 133 by a movement combining a translation and a rotation, thereby optimizing the amount of collision energy that can be absorbed by the impact device 130.

As a further example shown in FIGs 4A and 4B, the shaft 137 can be located in a central position in an eyelet 138 fixed to an end of the transverse arm 132, which eyelet has an inner diameter exceeding a diameter of the shaft 137. As such, during the relative rotation, the connecting element 136 can be constrained with respect to the transverse arm, to maintain the mechanical connection between the cabin and the chassis 120, e.g. by a bearing.

Additionally, a flexible element 139 may optionally be present between the eyelet 138 and the shaft 137. Accordingly, in case of a collision when the connecting element 136 is distorted relative to the transverse arm 132, additional collision energy can be absorbed by the flexible element 139 being deformed, e.g. as shown in FIG 4B.

FIG 5 provides a diagram of an embodiment of a control circuit 150 of the vehicle. The control circuit is for example coupled to a low voltage (e.g. 24V) circuit of the electric power module 110, which may further comprise a main switch 115, one or more high voltage relay boxes 111, a battery/power management system 112, and one or more invertors 113.

The control circuit 150 may comprise a low power signal line 151 arranged for providing the control signal, e.g. a signal arranged for controlling an input of one or more of the components of the electric power module 110. The control signal can e.g. be a continuous signal. The low power signal line 151 e.g. passes through the impact device 130, and the control signal is arranged for switching the electric power module 110 between the active state and the passive safe state, e.g. by switching one or more invertors 113 and/or the power management system 112 between a condition in which they receive power, and a condition in which they cannot receive power.

The electrical conductor 135, arranged for interrupting the control circuit 150, is provided in the low power signal line 151. By having the electrical conductor 135 in the low power signal line 151 passing through the impact device, the electrical conductor 135 is arranged for disconnecting by the relative movement between the chassis and the unit, thereby switching the electric power module 110 from the active state to the passive safe state. For example, the control signal can be used for controlling a normally open switchable element in the one or more invertors 113 and/or in the power management system 112 to switch to a closed position, to switch the one or more invertors 113 and/or in the power management system 112 to the active state. Conversely, when the control signal is lost, or interrupted, the one or more invertors 113 and/or in the power management system 112 are switched back to the passive safe state by default, in which their power supply is shut off.

As a double safety feature, the power management system 112 and the one or more invertors 113 can for example be arranged to not go back to the active state in case the electrical conductor 135 would unexpectedly get closed again. A key cycle from main switch 115 may e.g. be needed to reset the power management system 112 and the one or more invertors 113 such that they allow the active state again.

Additionally, the low power signal line 151 can e.g. be provided with one or more fuses 139. In case the breaking element interrupts the electrical conductor 135, the broken parts of the breaking element may for example create a short circuit, e.g. by connecting the supply side of the electrical conductor 135 to the vehicle chassis, thereby blowing the one or more fuses 139 and ensuring that the electric power module 110 remains in the passive safe state. Preferably, the electric power module 110 comprises an invertor 113 provided with switchable elements, e.g. arranged for supplying power to the invertor 113. The switchable elements are configured to be in a normally open position. The control signal is arranged for switching the electric power module 110 to the active state by switching the switchable elements from the normally open position to a closed position, e.g. in which the invertor 113 is supplied with power. As such, when the control circuit 150 is interrupted, the switchable elements may be switched to the normally open position by default, thereby switching off the power supply of the invertor 113, and switching off the HV system of the vehicle accordingly.

As illustrated in FIG 5, the electric power module 110 may further comprise a power management system 112 provided with contactors, e.g. arranged for supplying power to the power management system 112. The contactors can be configured to be in a normally open position. The control signal is arranged for switching the electric power module 110 to the active state by switching the contactors from the normally open position to a closed position, e.g. in which the power management system 112 receives power. As such, the contactors may be switched to the normally open position by default when the control circuit 150 is interrupted, e.g. by the electrical conductor 135 disconnecting caused by a relative movement of the impact device described herein, so that the power supply of the power management system 112 is switched off, thereby switching off the HV system of the vehicle.

Alternatively, or additionally, the control signal can be arranged for switching other components of the electric power module 110 and/or the vehicle 100 between an active state and a passive safe state, e.g. in which power supply is shut off by default. Accordingly, the control circuit can be arranged for providing a redundant safety system for switching off the HV system of a commercial vehicle, e.g. driven or powered by an electric power source.

It is thus believed that the operation and construction of the present invention will be apparent from the foregoing description and drawings appended thereto. For the purpose of clarity and a concise description features are described herein as part of the same or separate embodiments, however, it will be appreciated that the scope of the invention may include embodiments having combinations of all or some of the features described.

The invention applies not only to automotive applications where the impact device is used for safety purposes, e.g. for switching off a high voltage system, but also to other technical, agricultural or industrial applications where an impact device is used. It will be clear to the skilled person that the invention is not limited to any embodiment herein described and that modifications are possible which may be considered within the scope of the appended claims. Also kinematic inversions are considered inherently disclosed and can be within the scope of the invention. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean `at least one', and do not exclude a plurality. Features that are not specifically or explicitly described or claimed may additionally be included in the structure of the invention without departing from its scope.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A commercial vehicle, comprising:
- an electric power module, mounted to a chassis of the vehicle and arranged for providing electric power;
- a high voltage system arranged for receiving electric power from the electric power module;
- a control circuit, coupled to the electric power module and arranged for providing a control signal, wherein the control signal is arranged for switching the electric power module between an active state, in which electric power is provided to the high voltage system, and a passive safe state, in which electric power to the high voltage system is switched off; and
- an impact device, forming a mechanical connection between the chassis and a unit of the vehicle, and arranged for allowing a relative movement between the unit and the chassis while maintaining the mechanical connection in case of a collision of the vehicle, to protect the unit by absorbing collision energy;
wherein the control circuit at least partially passes through the impact device;
wherein the impact device comprises an electrical conductor arranged for disconnecting by the relative movement between the chassis and the unit; and
wherein, when disconnected, the control circuit is interrupted, thereby switching the electric power module from the active state to the passive safe state.

2. The commercial vehicle according to claim 1, wherein, in case of a collision, the impact device is arranged for allowing a relative movement between the unit and the chassis, between a normal condition and a shifted condition, wherein the electrical conductor is arranged for disconnecting by a relative movement between the unit and the chassis from the normal condition to the shifted condition.

3. The commercial vehicle according to claim 2, wherein the impact device comprises a breaking element, wherein, prior to a collision, the breaking element is arranged for fixating the unit to the chassis in the normal condition, and wherein, in case of a collision, the breaking element is arranged for breaking to allow a relative movement between the unit and the chassis towards the shifted condition.

4. The commercial vehicle according to any preceding claim, wherein the impact device is arranged for interrupting the control circuit when the relative movement between the unit and the chassis exceeds a movement threshold, by disconnecting the electrical conductor.

5. The commercial vehicle according to any preceding claim, wherein the unit is a cabin of the vehicle.

6. The commercial vehicle according to claim 5, wherein the impact device comprises at least one plate which is connected to the chassis, as well as a strip which in a lateral direction is positioned perpendicular to the at least one plate and with at least part of at least one of two longitudinal edges fixed to the at least one plate, wherein a first end of the strip is connected to a connecting element that is connected to a transverse arm, wherein the transverse arm is connected to the cabin, wherein the breaking element is mounted between the connecting element and the chassis, wherein the electrical conductor is arranged adjacent to the breaking element, and wherein the connecting element, in case of a collision to absorb collision energy, is adapted to be distorted relative to the transverse arm by the breaking element being arranged to break first, thereby disconnecting the electrical conductor, prior to the strip being allowed to be torn loose from the at least one plate.

7. The commercial vehicle according to any preceding claim, comprising at least two impact devices, wherein the control circuit passes at least partially through each of the at least two impact devices in series.

8. The commercial vehicle according to any preceding claim, wherein the electrical conductor comprises a breakable electrical wire.

9. The commercial vehicle according to any preceding claim, wherein the control circuit comprises a low power signal line arranged for providing the control signal, and wherein the electrical conductor is provided in the low power signal line.

10. The commercial vehicle according to any preceding claim, wherein the electric power module comprises one or more invertors, each provided with switchable elements, and wherein the control signal is arranged for switching the electric power module to the active state by switching the switchable elements from a normally open position to a closed position.

11. The commercial vehicle according to any preceding claim, wherein the electric power module comprises a power management system provided with contactors, and wherein the control signal is arranged for switching the electric power module to the active state by switching the contactors from a normally open position to a closed position.
